# EUROPEAN PATENT SPECIFICATION

(11) **EP 3 522 049 B1**
(45) Date of publication and mention of the grant of the patent: **03.03.2021**
(21) Application number: 17916289.6
(22) Date of filing: 19.07.2017
(51) Int. Cl.: G06F 12/14, G06F 21/71, G06F 21/64

(54) **DATA PROTECTION METHOD FOR CHIP REWRITING EQUIPMENT, ELECTRONIC EQUIPMENT AND STORAGE MEDIUM**
DATENSCHUTZVERFAHREN FÜR CHIPNEUBESCHREIBUNGSAUSRÜSTUNG, ELEKTRONISCHE AUSRÜSTUNG UND SPEICHERMEDIUM
PROCÉDÉ DE PROTECTION DE DONNÉES POUR ÉQUIPEMENT DE RÉÉCRITURE DE PUCE, ÉQUIPEMENT ÉLECTRONIQUE ET SUPPORT D'INFORMATIONS

(30) Priority: 30.06.2017 CN 201710527894
(43) Date of publication of application: 07.08.2019
(73) Proprietor: Hangzhou Chipjet Technology Co., Ltd., Binjiang District Hangzhou Zhejiang 310052 (CN)
(72) Inventor: CHEN, Tao, Hangzhou Zhejiang 310012 (CN); WANG, Min, Hangzhou Zhejiang 310012 (CN); SHAO, Yuanjin, Hangzhou Zhejiang 310012 (CN)
(74) Representative: Köllner, Malte
(86) International application number: PCT/CN2017/093452
(87) International publication number: WO 2019/000510

(56) References cited:
- EP-A1- 2 230 618
- CN-A- 103 825 649
- CN-A- 106 845 289
- FR-A1- 3 035 241
- US-A- 5 781 793
- US-A1- 2009 313 695
- US-A1- 2011 185 435
- US-A1- 2013 054 979

## Description

### TECHNICAL FIELD

The present disclosure relates to a printing consumable chip rewriting equipment, especially relates to a data protection method for chip rewriting equipment, electronic equipment, and storage medium.

### BACKGROUND TECHNOLOGY

In the printing consumable chip rewriting equipment in prior art, the chip reset and rewriting data is usually stored in the FLASH memory built in the main control chip of the equipment. A memory, such as EEPROM, is further located on the periphery of the main control chip to store the reset and rewriting data. Because the main control chip usually communicates in plaintext with the peripheral memory through the serial port of I2C type, the content of the periphery memory can not be protected. The illegal businessman can modify the internal reset and rewriting data of the periphery memory by connecting a MCU control chip to the peripheral memory.

US 2011/185435 A1 discloses a flash memory storage system having a flash memory controller, a flash memory chip and a smart card chip is provided. The flash memory chip is configured to store security data. The flash memory controller generates a signature corresponding to the security data according to, a private key and the security data with a one-way hash function, and stores the signature into the smart card chip. However, it does not disclose how to protect data when the consumable data is illegally tampered in the printing consumable chip rewriting equipment.

### SUMMARY

The invention is set out in the appended set of claims. The dependent claims set out particular embodiments. In order to overcome the shortcoming of the prior art, the purpose of the present disclosure is to provide a data protection method for chip rewriting equipment, electronic equipment, and storage medium. Through the present disclosure, the anti-decoding protection of the data in peripheral memory of the main control chip of the rewriting equipment is realized, and the data security of the chip rewriting equipment is enhanced. The data protection method for chip rewriting equipment, the electronic equipment and the computer readable storage medium are easy to be realized and are high in usability.

A data protection method for chip rewriting equipment is provided in the present disclosure and includes the following steps:
reading data comprising reading consumable data of an off-chip memory;
verifying data comprising verifying the consumable data by a verification algorithm and obtaining a first verification result;
matching data comprising determining whether the first verification result is equal to the data stored in an on-chip nonvolatile memory, characterized in that,
in the step of reading data, the consumable data comprises number of authorized rewriting times of the chip rewriting equipment and configuration data of the equipment, and establishing a mirror space in the on-chip volatile memory and reading the consumable data from the off-chip memory into the mirror space, and
in the step of matching data, if the first verification result is equal to the data stored in an on-chip nonvolatile memory, the consumable data is read and executed by an application program to obtain an execution result; if the first verification result is not equal to the data stored in an on-chip nonvolatile memory, an error prompt is sent and the equipment is locked;
when the consumable data is read and executed by the application program, the data protection method further comprises updating data comprising writing the execution result in the off-chip memory and the mirror space, verifying the execution result by the verification algorithm to obtain a second verification result, and the second verification result is written into the on-chip nonvolatile memory.

Furthermore, the capacity of the mirror space can be greater than or equal to the capacity of off-chip memory.

Furthermore, the on-chip volatile memory can be RAM.

Furthermore, the RAM can be static RAM or dynamic RAM.

Furthermore, the off-chip memory can be a nonvolatile memory.

Furthermore, the step of updating data can include writing the execution result in the off-chip memory and the RAM.

An electronic equipment includes: a processor; a memory; and a program; the program is stored in the memory and configured to be executed by the processor; the program is configured to perform the data protection method for chip rewriting equipment above when the program is executed by the processor.

A computer readable storage medium, storing a computer program therein, wherein the computer program is configured to be executed by a processor to perform the data protection method for chip rewriting equipment above when the program is executed by the processor.

Compared with the prior art, the present disclosure has following advantages:

The data protection method for chip rewriting equipment, including the steps of reading data, verifying data, matching data, and updating data. When the equipment is powered on, the data in an off-chip memory is verified, and the verification result is compared with data stored in an on-chip nonvolatile memory. If the data is equal, the data in the off-chip memory is copied to a mirror unit of an on-chip volatile memory. The application program reads the data from the on-chip volatile memory and continues to execute the data, and writes the execution result into the off-chip memory. The execution result is written into the on-chip nonvolatile memory after being processed through a verification algorithm. The present disclosure furthermore relates to electronic equipment and a computer readable storage medium. The anti-decoding protection of the data in the peripheral memory of the main control chip of the rewriting equipment is realized, and the data security of the chip rewriting equipment is enhanced. The data protection method for chip rewriting equipment, electronic equipment and the computer readable storage medium are easy to be realized and high in usability.

The above description is only an overview of the technologies of the present disclosure. In order to better understand the technical means of the present disclosure and to implement the technical means of the present disclosure according to the contents of the specification, the following is a detailed description with drawings of the prefer embodiments of the present disclosure. The specific embodiments of the present disclosure are given in detail by the following embodiments and the drawings.

### BRIEF DESCRIPTION OF THE DRAWINGS

The drawings here is used to further explain the present disclosure, and as a part of the application. The schematic embodiments of the present disclosure and the description are used to explain the present disclosure, and not as an improper limitation of the present disclosure. In the drawings:
FIG. 1 is a flow chat of a data protection method for chip rewriting equipment of the present disclosure.
FIG. 2 is a flow chat of a data protection for bottom program of the present disclosure.
FIG. 3 is a flow chat of a data protection for application program of the present disclosure.

### DETAILED DESCRIPTION OF THE EMBODIMENT

References will now be made to the drawings to describe, in detail, various embodiments of the present disclosure. It is noticed that, under the condition of non-conflict, the following embodiments or the technical features can be arbitrarily combined to form a new invention.

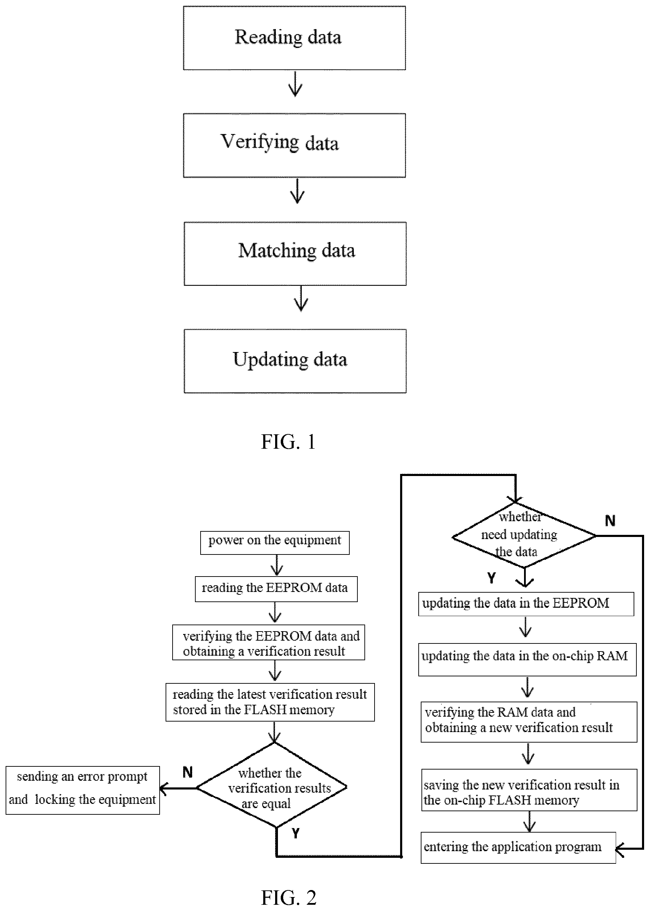

A data protection method for chip rewriting equipment, as shown in FIG. 1, includes following steps:
Reading data: reading the consumable data of the off-chip memory. The consumable data includes number of authorized rewriting times of the chip rewriting equipment and configuration data of the equipment. The step of data reading further includes: establishing a mirror space in on-chip volatile memory and reading consumable data from the off-chip memory to the mirror space. Preferably, the capacity of the mirror space is greater than or equal to the capacity of the off-chip memory. Preferably, the on-chip volatile memory is Random Access Memory, RAM. Preferably, the RAM is static RAM or dynamic RAM, the static RAM and the dynamic RAM have the same manner of data reading and writing. Preferably, the off-chip memory is a nonvolatile memory, and in one embodiment the off-chip memory is EEPROM. In one embodiment, as shown in FIG. 2, the data protection for bottom operating program can include: establishing a mirror space with a capacity same as the capacity of the EEPROM, at a constant address of the on-chip RAM, the capacity of the mirror space is 32KB; defining P pointer pointed to the mirror space address of the on-chip RAM; continuously reading 32768 bytes of data, and saving the data into the mirror space of the on-chip RAM; reading the data of EEPROM into the mirror space only one time after power-on, all the data in the process of operating the equipment are obtained through the on-chip RAM, and writing data in both RAM and EEPROM at the same time.

Verifying Data: verifying the consumable data by the verification algorithm and obtaining the first verification result. The verification algorithm includes CRC algorithm, MD2 algorithm, MD4 algorithm, MD5 algorithm, SHA1 algorithm, SHA256 algorithm, SHA384 algorithm, SHA512 algorithm, RIPEMD algorithm, PANAMA algorithm, TIGER algorithm, or ADLER32 algorithm. Preferably, the verification algorithm is CRC algorithm, and the consumable data is verified by the CRC algorithm.

Matching data: determining whether the first verification result is equal to the data stored in the on-chip nonvolatile memory. If yes, the consumable data is read and executed by the application program, and the execution result is obtained. If no, an error prompt is sent and the equipment is locked.

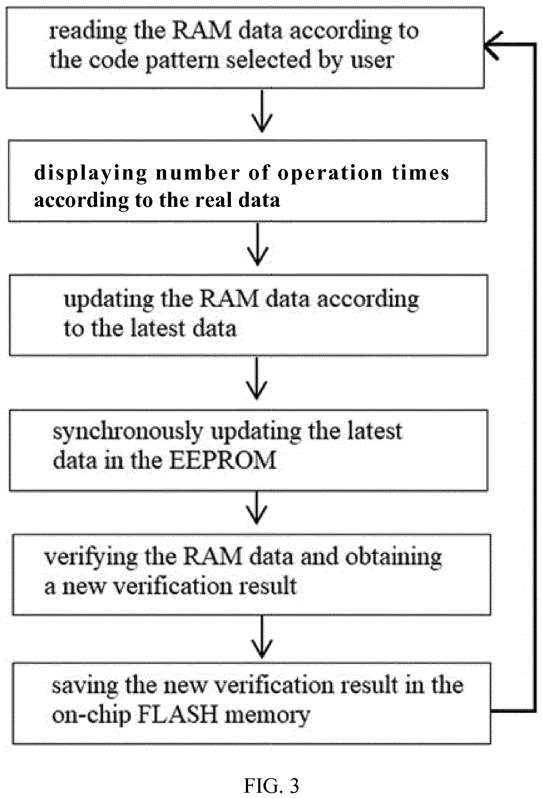

Updating data: writing the execution result into the off-chip memory, and verifying the execution result by the verification algorithm to obtain the second verification result. The second verification result can be written into the on-chip nonvolatile memory. In one embodiment, as shown in FIG. 3, the application program reads the data from the on-chip RAM and continues to execute the data, and the execution result is obtained. Preferably, the step of updating data can further include: writing the execution result into the mirror space. Preferably, the step of updating data can include: writing the execution result into the off-chip memory and RAM, verifying the execution result by the CRC algorithm to obtain the second verification result, and writing the second verification result into the on-chip nonvolatile memory which is FLASH memory in one embodiment.

There are two situations the equipment date may be decoded or tampered. The chip rewriting equipment is designed to have the data protection in order to avoid the two situations of decoding which may occur. In one embodiment, in the process of powering on the equipment, the erase data of the chip rewriting equipment is tampered by the external MCU; after powering on the equipment, the data stored in the off-chip EEPROM memory is verified first, and the verification result is compared with the data stored in the on-chip FLASH memory. If the data are mismatched, the equipment sends an error prompt. In other words, even if the data has been illegally tampered before powering on the equipment, the illegal data can also be detected by the verification process, and data protection is realized.

In one embodiment, after powering on the equipment, the erase data of the chip rewriting equipment is tampered by the external MCU; after powering on the equipment, the data stored in the off-chip EEPROM memory matches with the data stored in the on-chip FLASH memory, the data of the EEPROM is mirror-image copied to on-chip RAM. The application program of the equipment reads the data from the on-chip RAM and continues to execute the data, and the execution result is written into the next address of the off-chip EEPROM. Furthermore, the data written into the off-chip EEPROM is written into the on-chip FLASH memory through the CRC encryption algorithm. In other words, even if the data has been illegally tampered after powering on the equipment, the illegal data would not be read and executed by the application program. The data written into the next address of the off-chip EEPROM is still legal. Furthermore, the illegal data can also be detected by the verification process in the next process of powering on the equipment, and data protection is realized.

An electronic equipment can include: a processor; a memory; and a program. The program is stored in the memory and configured to be executed by the processor. The program is configured to perform the data protection method for chip rewriting equipment described above. A computer readable storage medium is provided. The computer program is stored in the computer readable storage medium and configured to be executed by the processor to perform the data protection method for chip rewriting equipment described above.

The present disclosure discloses a data protection method for chip rewriting equipment. The method includes the steps of reading data, verifying data, matching data, and updating data. When the equipment is powered on, the data in an off-chip memory is verified, and the verification result is compared with data stored in an on-chip nonvolatile memory. If the data is equal, the data in the off-chip memory is copied to a mirror unit of an on-chip volatile memory. The application program reads the data from the on-chip volatile memory and continues to execute the data, and writes the execution result into the off-chip memory. The execution result is written into the on-chip nonvolatile memory after being processed through the verification algorithm. The present disclosure furthermore relates to electronic equipment and a computer readable storage medium. Anti-decoding protection of the data in peripheral memory of the main control chip of the rewriting equipment can be realized, and the data security of the chip rewriting equipment can be enhanced. The data protection method for chip rewriting equipment, the electronic equipment and the computer readable storage medium are easy to be realized and high in usability.

## Claims

1. A data protection method for chip rewriting equipment, wherein the data protection method comprises the following steps:
step of reading data, comprising reading consumable data of an off-chip memory;
step of verifying data, comprising verifying the consumable data by a verification algorithm and obtaining a first verification result;
step of matching data, comprising determining whether the first verification result is equal to the data stored in an on-chip nonvolatile memory, **characterized in that**,
in the step of reading data, the consumable data comprises number of authorized rewriting times of the chip rewriting equipment and configuration data of the equipment, establishing a mirror space in an on-chip volatile memory and reading the consumable data from the off-chip memory into the mirror space,
and in the step of matching data, if the first verification result is equal to the data stored in the on-chip nonvolatile memory, the consumable data is read and executed by an application program to obtain an execution result; if the first verification result is not equal to the data stored in the on-chip nonvolatile memory, an error prompt is sent and the chip rewriting equipment is locked; and
when the consumable data is read and executed by the application program, the data protection method further comprises step of updating data, comprising writing the execution result into the off-chip memory and the mirror space in the on-chip volatile memory, verifying the execution result by the verification algorithm to obtain a second verification result, and writing the second verification result into the on-chip nonvolatile memory.

2. The data protection method for chip rewriting equipment of claim 1, wherein the capacity of the mirror space is greater than or equal to the capacity of the off-chip memory.

3. The data protection method for chip rewriting equipment of claim 1, wherein the on-chip volatile memory is Random Access Memory, RAM.

4. The data protection method for chip rewriting equipment of claim 3, wherein the RAM is static RAM or dynamic RAM.

5. The data protection method for chip rewriting equipment of claim 1, wherein the off-chip memory is a nonvolatile memory.

6. An electronic equipment, wherein the electronic equipment comprises a processor adapted to perform the data protection method for chip rewriting equipment of any one of claims 1-5.

7. A computer readable storage medium, storing a computer program therein, wherein the computer program comprises instructions which, when the program is executed by a processor, cause the processor to perform the data protection method for chip rewriting equipment of any one of claims 1-5.

## Patentansprüche

1. Datenschutzverfahren für eine Chip-Rückschreibeinrichtung, wobei das Datenschutzverfahren die folgenden Schritte umfasst:
Schritt des Lesens von Daten, der das Lesen von Verbrauchsdaten eines Off-Chip-Speichers umfasst;
Schritt des Verifizierens von Daten, der das Verifizieren der Verbrauchsdaten durch einen Verifikationsalgorithmus und das Erhalten eines ersten Verifikationsergebnisses umfasst;
Schritt des Abgleichs von Daten, umfassend das Bestimmen, ob das erste Verifikationsergebnis gleich den in einem nichtflüchtigen On-Chip-Speicher gespeicherten Daten ist, **dadurch gekennzeichnet, dass**,
in dem Schritt des Lesens von Daten die Verbrauchsdaten die Anzahl der autorisierten Überschreibzeiten der Chip-Überschreibeinrichtung und Konfigurationsdaten der Einrichtung umfassen, sowie Einrichten eines Spiegelraums in einem flüchtigen On-Chip-Speicher und Lesen der Verbrauchsdaten aus dem Off-Chip-Speicher in den Spiegelraum,
und im Schritt des Abgleichs von Daten, wenn das erste Verifizierungsergebnis gleich den in dem nichtflüchtigen On-Chip-Speicher gespeicherten Daten ist, die Verbrauchsdaten gelesen und von einem Anwendungsprogramm ausgeführt werden, um ein Ausführungsergebnis zu erhalten; und wenn das erste Verifizierungsergebnis nicht gleich den in dem nichtflüchtigen On-Chip-Speicher gespeicherten Daten ist, eine Fehlermeldung gesendet und die Chip-Überschreibeinrichtung gesperrt wird; und
wenn die Verbrauchsdaten durch das Anwendungsprogramm gelesen und ausgeführt werden, das Datenschutzverfahren ferner den Schritt des Aktualisierens von Daten umfasst, der das Schreiben des Ausführungsergebnisses in den Off-Chip-Speicher und des Spiegelraums in den flüchtigen On-Chip-Speicher umfasst, sowie das Verifizieren des Ausführungsergebnisses durch den Verifizierungsalgorithmus, um ein zweites Verifizierungsergebnis zu erhalten, und das Schreiben des zweiten Verifizierungsergebnisses in den nichtflüchtigen On-Chip-Speicher umfasst.

2. Datenschutzverfahren für die Chip-Rückschreibeinrichtung nach Anspruch 1, wobei die Kapazität des Spiegelraums größer oder gleich der Kapazität des Off-Chip-Speichers ist.

3. Datenschutzverfahren für die Chip-Rückschreibeinrichtung nach Anspruch 1, wobei der flüchtige On-Chip-Speicher ein Random Access Memory, RAM, ist.

4. Datenschutzverfahren für die Chip-Rückschreibeinrichtung nach Anspruch 3, wobei der RAM ein statischer RAM oder ein dynamischer RAM ist.

5. Datenschutzverfahren für die Chip-Rückschreibeinrichtung nach Anspruch 1, wobei der Off-Chip-Speicher ein nichtflüchtiger Speicher ist.

6. Elektronisches Gerät, wobei das elektronische Gerät einen Prozessor umfasst, der geeignet ist, das Datenschutzverfahren für die Chip-Rückschreibeinrichtung nach einem der Ansprüche 1-5 durchzuführen.

7. Computerlesbares Speichermedium, auf dem ein Computerprogramm gespeichert ist, wobei das Computerprogramm Anweisungen umfasst, die, wenn das Programm von dem Prozessor ausgeführt wird, den Prozessor veranlassen, das Datenschutzverfahren für die Chip-Rückschreibeinrichtung nach einem der Ansprüche 1-5 durchzuführen.

## Revendications

1. Procédé de protection des données pour un équipement de réécriture de puce, dans lequel le procédé de protection des données comprend les étapes suivantes :
l'étape de lecture des données, comprenant la lecture des données consommables d'une mémoire hors puce ;
l'étape de vérification des données, comprenant la vérification des données consommables par un algorithme de vérification et l'obtention d'un premier résultat de vérification ;
l'étape de mise en correspondance des données, comprenant la détermination si le premier résultat de vérification est égal aux données stockées dans une mémoire non volatile sur puce, **caractérisée en ce que**
dans l'étape de lecture des données, les données consommables comprennent le nombre de réécritures autorisées du matériel de réécriture de la puce et des données de configuration du matériel, l'établissement d'un espace miroir dans une mémoire volatile sur la puce et le transfer des données consommables de la mémoire hors puce dans l'espace miroir,
et lors de l'étape de mise en correspondance des données, si le premier résultat de vérification est égal aux données stockées dans la mémoire non volatile sur la puce, les données consommables sont lues et exécutées par un programme d'application pour obtenir un résultat d'exécution ; si le premier résultat de vérification n'est pas égal aux données stockées dans la mémoire non volatile sur la puce, une invite d'erreur est envoyée et le matériel de réécriture de la puce est verrouillé ; et
lorsque les données consommables sont lues et exécutées par le programme d'application, la méthode de protection des données comprend en outre une étape de mise à jour des données, comprenant l'écriture du résultat de l'exécution dans la mémoire hors puce et dans l'espace miroir de la mémoire volatile sur puce, la vérification du résultat de l'exécution par l'algorithme de vérification pour obtenir un second résultat de vérification, et l'écriture du second résultat de vérification dans la mémoire non volatile sur puce.

2. Le procédé de protection des données pour l'équipement de réécriture de puce de la revendication 1, dans lequel la capacité de l'espace miroir est supérieure ou égale à la capacité de la mémoire hors puce.

3. Le procédé de protection des données pour l'équipement de réécriture de puce de la revendication 1, dans lequel la mémoire volatile sur puce est la mémoire vive (RAM).

4. Le procédé de protection des données pour l'équipement de réécriture de puce de la revendication 3, dans lequel la mémoire vive est une mémoire vive statique ou dynamique.

5. Le procédé de protection des données pour l'équipement de réécriture de puce de la revendication 1, dans lequel la mémoire hors puce est une mémoire non volatile.

6. Un équipement électronique, dans lequel l'équipement électronique comprend un processeur adapté pour effectuer le procédé de protection des données pour l'équipement de réécriture de puce de l'une quelconque des revendications 1 à 5.

7. Un support de stockage lisible par ordinateur, stockant un programme informatique, dans lequel le programme informatique comprend des instructions qui, lorsque le programme est exécuté par un processeur, font en sorte que le processeur exécute le procédé de protection des données pour l'équipement de réécriture de puce de l'une quelconque des revendications 1 à 5.
